# EUROPEAN PATENT APPLICATION

(11) **EP 4 595 750 A1**
(43) Date of publication of application: **06.08.2025**
(21) Application number: 24154985.6
(22) Date of filing: 31.01.2024
(51) Int. Cl.: A01N 37/36, A01N 25/02, A01P 1/00, C09D 5/14

(54) **IN-CAN PRESERVATION OF AQUEOUS POLYMER COMPOSITIONS USING LACTIC ACID ESTER**

(71) Applicant: Follmann GmbH & Co. KG, 32423 Minden (DE)
(72) Inventor: AMADO MUÑOZ, Raúl, 32457 Porta Westfalica (DE)
(74) Representative: Hoffmann Eitle

(57) **Abstract**

Aqueous polymer composition comprising lactic acid ester, in particular as in-can preservation system, and the use of lactic acid esters as in-can preservatives for aqueous coating compositions.

## Description

The invention relates to the technical field of aqueous polymer compositions, e.g. for coating applications, such as paints and adhesives, and in-can preservatives for such polymer compositions.

Aqueous polymer compositions (compositions comprising at least one polymer and water) as raw materials for various products and as end products have a wide range of applications. It is well known that aqueous products are susceptible to germs. In order to ensure sufficient storage stability of such products, the use of biocides is necessary. The development of aqueous polymer compositions for coating applications, such as paints, for example as an environmentally friendly alternative to the long-established solvent-based coatings, has made it possible to reduce the amount of solvents in the production and further processing of products of this type to be reduced or avoided completely.

Aqueous varnishes, paints, inks and adhesives require conservation with in-can preservatives, both, for their raw materials (polymer dispersions) and the respective end products in order to warrant the necessary shelf life. Isothiazolinones and formaldehyde donors are currently the most relevant active substances for this purpose. The former can induce allergical skin reactions while the latter are being classified as carcinogen of category 1B and therefore under obligation to be phased out in the future. For this reason, the use of such substances is subject to increasingly extensive legal restrictions.

As a consequence of previous and ongoing regulation, potential options for in-can preservation of aqueous compositions e.g. for coating applications in general are narrowed. Product innovation, due to a challenging approval process under the Biocidal Products Regulation (BPR) (EC) No. 528/2012, accordingly focuses mainly on new combinations of existing agents in lower concentrations. Prior to the invention, the in-can preservation systems used for the aqueous formulations were based on biocides approved in the Biocides Regulation (EU) No. 528/2012, including 1,2-benzisothiazolin-3-one (BIT), Bronopol, Chlormethyl-/ Methylisothiazolone, 2,2-dibromo-2-cyanoacetamide, 1,2-dibromo-2,4-dicyanbutane, lodopropynyl butylcarbamate, N-(3-aminopropyl)-N-dodecylpropane-1,3-diamine, zinc pyrithione, sodium pyrithione, titanium dioxide/ silver chloride. Options typically were to reduce or to completely avoid in-can preservatives, which is often combined with adverse side-effects. High pH-values are often employed for paints. For example, there are silicate paints available which avoid use of biocides but they can only be used on mineral surfaces. Due to their high pH (11.5) they can cause skin or eye irritations. Therefore, their use is technically restricted.

Accordingly, there is a need for feasible alternative substances or procedures with comparable effectiveness for in-can preservation, but which have lower risks.

Solutions have been found for dispersion paints (wall paints) e.g. in WO2021079871 and WO2021078932. WO2021078932 describes a formulation for the production of a dispersion paint with storage stability. This is caused by the addition of amino acids. Annex I of the regulation lists other active substances that are considered to be low-risk including food additives, pheromones and other substances with low toxicity, such as weak acids, alcohols and vegetable oils used in cosmetics and food products.

The underlying problem is solved by an aqueous polymer composition according to the invention comprising lactic acid ester, in particular as in-can preservation system, and the use of lactic acid ester as in-can preservatives for aqueous polymer compositions.

In particular the problem is solved by an aqueous polymer composition, preferably solely preserved by lactic acid ester, comprising at least one lactic acid ester, wherein the lactic acid ester is the only compound in the composition, that is present in a concentration sufficient to exhibit an antimicrobial, preferably biocidal, effect.

The problem is further solved by an aqueous polymer composition comprising at least one lactic acid ester, wherein the lactic acid ester is the only compound in the composition, that is present in a concentration sufficient to increase the logarithmic germ reduction when determined in accordance with DIN EN ISO 11930:2023-01.

Furthermore the problem is solved by an aqueous polymer composition comprising at least one lactic acid ester, that is stable against microbial and/or fungal growth for at least six days, in particular six days to two years, more preferably at least 3 months, more preferably at least 6 months, especially preferred 3 months to 1 year.

In a preferred embodiment the aqueous polymer composition, preferably solely preserved by lactic acid ester, is stable against microbial and/or fungal growth for at least six days, in particular six days to two years, more preferably at least 3 months, more preferably at least 6 months, especially preferred 3 months to 1 year and comprises at least one lactic acid ester, wherein the lactic acid ester is the only compound in the composition, that is present in a concentration sufficient to exhibit an antimicrobial, preferably biocidal, effect and/or to increase the logarithmic germ reduction when determined in accordance with DIN EN ISO 11930:2023-01.

Preferably the pH-value of above respective compositions is 4 to 12, more preferably 7 to 12, most preferably from 8 to 10. Preferably the above respective aqueous polymer compositions comprise 0.5 wt % to 5 wt %, preferably 1 wt% to 3 wt%, more preferably 1.25 wt % to 2.5 wt% of lactic acid ester. If the concentration of lactic acid ester in the composition exceeds 5 wt%, the properties of the composition may be effected significantly.

Due to the outstanding storage stability of the compositions according to the invention, preferably for coating applications, the use of conventional preservatives can be dispensed with. Thus, the compositions according to the invention are advantageous in terms of environmental friendliness and occupational safety.

According to a preferred embodiment, the aqueous polymer composition is essentially free of other antimicrobial substances, preferably biocides, in particular the composition is preferably essentially free of isothiazolines, such as -1,2-benzisothiazolin-3-one (BIT) and Chlormethyl-/ Methylisothiazolone, Bronopol, 2,2-dibromo-2-cyanoacetamide and amine oxides. "Essentially free" in this context means that the aqueous polymer composition contains those substances at most in amounts not sufficient enough to have an antimicrobial, preferably biocidal effect, that is at most in trace amounts, preferably in an amount of less than 2 ppm. Examples of isothiazolines are methylisothiazolinone, chloromethylisothiazolinone, benzisothiazolinnone, octylisothiazolinone, dichloroctylisothiazolinone and butylbenzisothiazolinone. Preferably, the aqueous polymer composition is free from ([([(2-dihydro-5-methyl-3(2H)- oxazolyl)-I-methylethoxy]methoxy)methoxy]methanol.

All percentages and ratios used herein are weight percentages and weight ratios unless otherwise indicated.

The term "biocide" is used as defined in Regulation (EU) No. 528/2012 (Biocidal Products Regulation) referring to "any substance or mixture in the form in which it reaches the user and which consists of, contains or produces one or more active substances intended to destroy, deter, render harmless, prevent the action of or otherwise control harmful organisms otherwise than by mere physical or mechanical action", thereby excluding physically and mechanically active substances. A "biocidal" effect thus is achieved if the action harmful organisms is prevented or otherwise controlled by destroying, deterring, rendering harmless, in other ways than by mere physical or mechanical action. However, the main focus of the invention is the in-can preservation of aqueous compositions, to that repellents etc. included in the group of biocides are not essential to the technical solution.

The term "antimicrobial" refers to all substances which have the effect that the growth of bacteria, fungi and/or viruses is inhibited, colonization is counteracted from the outset or microorganisms are killed.

The effectiveness of an antimicrobial substance is defined by the germ reduction achieved within the contact time. This is expressed in log levels, with one log level corresponding to a reduction of germs by one power of ten (Iog10) and is determined in accordance with DIN EN ISO 11930:2023-01.

Depending on the application of the materials, different requirement profiles result. For example, plastic surfaces that come into contact with food over several days should have measurable germ reduction values of 3 log levels (= 99.9 %) with regard to possible bacterial infestation, based on a contact time of 24 hours or less. As a general rule, antimicrobial substances used in coatings, such as paints, should be targeted. They should be incorporated into the coating and surface matrix of the coating in such a way that washout via cleaning and disinfection measures is avoided as far as possible.

The term "microbial growth" refers to the growth of a population (or an increase in the number of cells), not to an increase in the size of the individual cell. Cell division leads to the growth of cells in the population. The term "fungal growth" refers to an increase in the size of a fungal colony.

Lactic acid ester refers to a substance according to general formula (I) 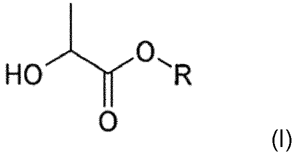 wherein R may be a hydrocarbon radical.

Hydrocarbon radical thus referring to any univalent radical, derived from linear, branched, (bi)cyclic, saturated or unsaturated, aliphatic or aromatic hydrocarbons (compounds composed solely of carbon and hydrogen), such as methyl or phenyl. Aliphatic compounds can be linear, branched, (bi)cyclic saturated, joined by single bonds (alkanes), or unsaturated, with double bonds (alkenes) or triple bonds (alkynes). Open-chain compounds, whether straight or branched, and which contain no rings of any type, are always aliphatic. Cyclic compounds can be aliphatic if they are not aromatic. The least complex aliphatic compound is methane (CH₄).

The polymer composition comprises at least one lactic acid ester preferably according to formula (I), wherein R is a hydrocarbon radical, or mixtures thereof, more preferably an aliphatic hydrocarbon radical, in particular an aliphatic hydrocarbon radical with C1 to C8, preferably C2 to C4, more preferably a C1 to C8-alkyl, especially preferred C2 to C4-alkyl, most preferably propyl or butyl. The polymer composition may also comprise mixtures of different lactic acid esters, preferably according to formula (I).

The polymer in the aqueous polymer compositions is typically used as binder polymer, meaning it is part of a polymer dispersion, preferably in water, used as a binder for compositions for different applications, such as paints. But also other applications of aqueous polymer compositions are thinkable. All kinds of polymers may thus be employed in the aqueous polymer compositions according to the invention. The polymer is preferably a film-forming polymer, that may be a biobased or natural polymer, such as cellulose, pectin, gelatin, sodium alginate maltodextrin, pullulan, xanthan, polymerized rosin, gum acacia or starch or a synthetic polymer, such as hydroxy propyl methyl cellulose, polyvinyl pyrrolidone, polyvinyl alcohol, sodium carboxy methyl cellulose, polyethylene oxide, hydroxyl propyl cellulose, hydroxyl ethyl cellulose or methyl cellulose. Preferably the aqueous polymer compositions, preferably for coating applications, comprises at least one polymer, preferably a film-forming polymer, selected from thermoplastic polymers such as vinyl polymers (such as polyacrylate and/or polymethacrylate (jointly referred to as "(meth)acrylate"), vinyl acrylic polymers, polyvinyl chloride, polyvinylalcohol, polystyrenes, polybutadienes, styrene- butadiene polymers, polyethylene, polypropylene), polyurethanes, polyesters, polyamides, polyethers or thermoset polymers such as certain polycarbonates (e. g. crosslinked polycarbonates), epoxies, polydicyclopentadienes, and copolymer and blends of one or more of these polymers, more preferably polyvinyl chloride, polyvinylalcohol, polyvinylacetate, ethylenvinylacetate, polyisobutylene or poly(meth)acrylate most preferably polyvinyl chloride, polyvinyl alcohol or poly(meth)acrylate or copolymers and blends of these polymers, preferably wherein the polymer is present in an amount effective to form a layer on a substrate when applied thereto.

In the context of the invention, polyacrylate and/or polymethacrylate polymers are jointly referred to as "poly(meth)acrylate").

In the aqueous polymer composition, especially if the aqueous polymer composition is an adhesive, poly(meth)acrylate refers to a polymer which is mainly polymerized by (meth)acrylic acid and (meth)acrylate monomers. For example, the monomers may be acrylic acid, methacrylic acid, methyl acrylate, ethyl acrylate, butyl acrylate, methyl methacrylate, isobutyl acrylate, isobutyl methacrylate, isobutyl methacrylate, 2-ethylhexyl acrylate, etc. More preferably, the monomers are methacrylic acid, acrylic acid, 2-ethylhexyl acrylate, or a combination thereof.

In addition to (meth)acrylic acid and (meth)acrylate monomers, other polymerization monomers may also be added to form a poly(meth)acrylate copolymer. For example, styrene or vinyl acetate monomers may be added. Acrylamide monomers such as methacrylamide and acryloyl morpholine and silanes, such as vinyltriethoxysilane, may also be used. Preferably the aqueous polymer composition that is an adhesive comprises poly(meth)acrylate-styrene copolymers.

The glass transition temperature T_{g} of the poly(meth)acrylate is preferably selected to be within a range of - 60 °C and 120 °C. In addition, the number-average molecular weight of the poly(meth)acrylate is preferably selected to be within a range of 10000 and 1500000 g/mol.

The polymer is preferably dispersed in the aqueous polymer composition. The polymer has typically the function of a binder in the aqueous polymer composition.

The binder polymer is typically added to the other components as a dispersion, preferably in water, and optionally additionally in a dry state, preferably in form of powder.

The weight ratio between lactic acid ester and polymer, preferably binder polymer, is in the range between 0.02 and 2.6, preferably 0.02 and 1, more preferably lower than 1.

The aqueous polymer composition may additionally comprise wetting agents, plasticizer, pH regulating agents, in particular alkalizer, defoamer, thickener, filler, colorants, such as pigments, surface additives and/or crosslinker.

"Colorant" is a generic term that includes inorganic pigments, organic pigments, UV markers, etc having the effect, that the aqueous polymer composition is not colorless. Preferred colorants are titanium dioxide, iron oxide, diketo-pyrrolo-pyrrole, ultramarine blue, phthalo cyanine green, chromium oxide green, color black and iron oxide black. There are various substances that can be used as pigments. Preferably, the pigment is selected from the group consisting of titanium dioxide, iron oxide yellow, arylide (monoazo), bismuth vanadate, (di)arylides, azo condensation pigments, pyranthones, isoindolines, anthraquinones, derivatives of dioxazines, perinones, naphthol AS derivatives, perylenes, quinacridones, indanthrenes, phthalocyanines, rutile-tin-zinc, quinacridones, diketo-pyrrolo-pyrrole, iron oxide red, phthalocyanine blue, dioxazine, cobalt blue, ultramarine blue, phthalo cyanine green, chromium oxide green, cobalt green, color black, iron oxide black, pyrazolo quinazolone, naphthol AS monoazo pigment, pigment Violet 23, or mixtures thereof.

Wetting agents/Surface additives modify the surface of the suspended components (polymers, pigments, etc.) to stabilize the suspension. Examples of wetting agents or dispersants include diethyl maleate, tall oil, polyethylene polyamine, reaction products of tall oil and polyethylene polyamine, polyether, polyether phosphate, polyethylene glycol monomethyl ether, ortho-cresyl glycidyl ether, 2-ethylhexyl glycidyl ether, block copolymers, ammonium salts of acrylate copolymers, polyether polysiloxane, polyoxyethylene (2)-stearyl alcohol, polyesters, fatty acid modified polyesters, sulfosuccionates, preferably polyoxyethylene (2)-stearyl alcohol, fatty acids modified polyester and sulfosuccinates, and mixtures thereof.

Examples of defoamers include polyurethane resins, polyglycols, triglycerides, polysiloxane-polyether copolymers, mineral oils and silicone oils, Preferably the defoamer is selected from polyglycols, triglycerides, polysiloxane-polyether copolymers, mineral oils, silicone oils or mixtures thereof.

Examples for thickeners are methyl hydroxyethyl cellulose, layered silicate such as bentonite, smectite and hectorite, xanthan gum, silica, polyurethane resin, octan-I-ol (ethoxylated, 4-EO), alcohol alkoxylates, ethylene oxide-propylene oxide copolymers, maleic anhydride-diisobutylene copolymers, polyacrylic and polymethacrylic acids and salts thereof, methyl celluloses, carboxymethyl celluloses, hydroxymethyl celluloses, polyurethanes, polyethers, polyamides, alkali metal phosphates, acrylates and salts of modified phosphoric acids, sodium lauryl sulfate and mixtures thereof, preferably methyl hydroxyethyl cellulose, layered silicate such as smectite and hectorite, xanthan gum, silica, polyurethane resin, octan-I-ol (ethoxylated, 4-EO), ethylene oxide-propylene oxide copolymers, maleic anhydride-diisobutylene copolymers, polyacrylic and polymethacrylic acids and salts thereof, methyl celluloses, carboxymethyl celluloses, hydroxymethyl celluloses, polyurethanes, alkali metal phosphates, acrylates and salts of modified phosphoric acids, sodium lauryl sulfate and mixtures thereof. Preferred thickeners are bentonite, silica, polyurethane resins, polyacrylic and polymethacrylic acids and salts thereof, methyl celluloses, carboxymethyl celluloses and hydroxymethyl celluloses. In an especially preferred embodiment, the polymer compositions do not comprise alcohol alkoxylates.

Fillers are preferably selected from the group consisting of carbonates, sulphates, oxides and mixtures thereof. In particular, the filler may be selected from the group consisting of dolomite, barium sulphate, feldspat, quartz, calcium carbonate, aluminium hydroxide, aluminium oxide, mica, kaolin, calcined kaolin, talc, clay, silica, diatomaceous earth and mixtures thereof. Especially preferred is calcium carbonate. Such fillers result in compositions with good processability. Calcium carbonate can be used in various forms, for example in the form of chalk or calcite.

Suitable plasticizers are widely known to a person skilled in the art and typically are phthalic esters, such as the all-purpose products diisononyl phthalate (DINP) and diisodecyl phthalate (DIDP), Bis(2-propylheptyl)phthalat (DPHP)as well as non-phthalate plasticizers such as adipates or terephthalates, e.g. DOTP (diethylehexyl terephthalate, DEHT), diisononyl cyclohexane dicarboxylate (DINCH), Bis(2-ethylhexyl) cyclohexane-1,4-dicarboxylate (DEHCH), Bibutyltherephthalate (DBT), (iso-)dipentyltherephtalate (DPT), diisoundecyltherephthalate (DIUP), esters of citric acid, acetic acid, such as glycerin triacetate (triacetin) or butyldiglycol acetate (BDGA), and esters of sulfonic acid, dipropylene glycol mono-n-butyl ether (DPNB), 4-methyl-1,3-dioxolan-2-one (PC) as well as bio-based plasticizers, such as plant-based plasticizers, e.g. epoxidized soybean oil, Preferred plasticizers are DOTP, DIUP, DINP und DINCH.

pH regulating agents set the pH of a composition to a desired value.The term alkalizer refers to substances used to set the pH in the basic pH range. In principle, a wide variety of alkalizers can be used to adjust the pH value. However, for economic as well as practical reasons, alkalizers selected from the group consisting of alkali metal hydroxides such as potassium, sodium, calcium and/or lithium hydroxide, alkaline earth metal hydroxides such as magnesium, calcium and/or barium hydroxide, ammonium hydroxide, sodium carbonate xonotlite and/or ettringite have proven to be particularly suitable. Sodium hydroxide and/or potassium hydroxide are particularly suitable as alkali adjusters for the precise adjustment of the pH value of the composition. Preferred alkalizers are potassium and sodium hydroxide, ammonium hydroxide, sodium carbonate or mixtures thereof.

Suitable crosslinkers according to the invention may be multifunctional (meth)acrylate monomers or oligomers with at least two (meth)acrylate groups, polyaziridine, polycarbodiimide, polyisocyanates, in particular diisocyanates such as Hexamethylendiisocyanat (HDI), metal salts, ammonium salts and organosilanes. Metal salt crosslinking can be achieved by adding suitable metal salts auch as those with the metal cations Al³⁺, Zn²⁺, Ti⁴⁺ , Ca²⁺ , Fe²⁺ , Fe³⁺ and Zr⁴⁺. Suitable counterions are, for example, acetylacetonates, hydroxides, oxalates, lactate, gycinate, acetate and also carboxylate groups or 2-(methacryloyloxy)-ethyl acetoacetate groups containing acrylate oligomers with a molar mass of up to 50000 g/mol. Suitable metal salts are, for example, aluminum acetylacetonate Al(acac)₃, titanium diisopropoxide bis(acetylacetonate) Ti(acac)₂OiPr₂, diammonium bis[carbonato-O]-dihydroxyzirconate (Bacote^{®} 20), iron(II) oxalate, calcium hydroxide or zinc hydroxide, e.g. Zn(OH)₂/NH₃. Particularly preferred is the metal salt selected from zinc salts, zirconium salts and aluminum salts. An especially preferred crosslinker is ammonium zirconium carbonate (AZC).

Te aqueous polymer composition may preferably be a plastisol precursor, printing ink, preferably for tissue, an ink receptive coating or adhesive, more preferably comprising polyvinylchloride, polyvinyl alcohol and/or poly(meth)acrylate. Typical compositions for the use as plastisol, printing ink, ink receptive coating or adhesive are known to the person skilled in the art. In principal, all those compositions may be preserved by the lactic acid ester according to the invention, as long as they are water-based (aqueous) compositions.

In this embodiment the aqueous polymer composition preferably comprises, more preferably consists of 95 wt % to 99.5 wt %, more preferably 97 wt % to 98.5 wt %, most preferably 97.5 wt% to 98.75 wt%, of a, preferably unpreserved, plastisol precursor composition, printing ink composition, ink receptive coating composition or adhesive composition and 0.05 wt% to 5 wt%, preferably 1 wt% to 3 wt%, more preferably 1.25 wt % to 2.5 wt% of lactic acid ester based on the total amount of the aqueous polymer composition.

A plastisol is a colloidal dispersion of small polymer particles, usually polyvinyl chloride (PVC) or other, e.g. polyvinyl alcohol (PVA), in a liquid plasticizer, optionally with fillers. When heated to around 180 °C (356 °F), the plastic particles absorb the plasticizer, causing them to swell and fuse together forming a viscous gel. Once this is cooled to below 60 °C (140 °F) it becomes a flexible, permanently plasticized solid product. This process is called "curing". A plastisol precursor composition is a plastisol composition in a solvent, preferably water, wherein the respective plastisol is formed upon drying/evaporation of the respective solvent.

In one embodiment the aqueous polymer composition is a plastisol precursor, preferably comprising polyvinylchloride, polyvinylalcohol, poly(meth)acrylate or polyurethane, more preferably polyvinylchloride.

In this embodiment the aqueous polymer composition comprises, preferably consists of of a, preferably unpreserved, plastisol precursor composition and lactic acid ester.

Preferably the plastisol precursor composition comprises polyvinylchloride as binder polymer.

Preferably the plastisol precursor composition comprises
- 0 to 20.0 wt % of dry binder polymer, preferably dry polyvinylchloride, more preferably powder;
- 10.0 wt% to 80.0 wt% of at least one binder, preferably an aqueous suspension or dispersion of a binder polymer, preferably polyvinylchloride, more preferably containing 35 wt% to 40 wt%, most preferably 38 wt% to 40 wt% of the binder polymer, preferably polyvinyl chloride:
- 5 wt% to 25.0 wt% plasticizer;
based on the total amount of the plastisol precursor composition.

More preferably the plastisol precursor composition comprises, more preferably consists of
- 0 to 20.0 wt % of dry binder polymer selected from polyvinylchloride and poly(meth)acrylate, preferably polyvinylchloride powder;
- 10.0 wt% to 80.0 wt% of at least one binder, preferably an aqueous suspension or dispersion of a binder polymer selected from polyvinylchloride and poly(meth)acrylate, preferably containing 35 wt% to 40 wt%, more preferably 38 wt% to 40 wt% of the binder polymer, most preferably polyvinylchloride:
- 0 wt% to 5.0 wt% wetting agent;
- 5 wt% to 25.0 wt% plasticizer;
- 0 wt% to 10.0 wt% alkalizer;
- 0 wt% to 5.0 wt%, preferably 0.5 wt% to 5.0 wt% defoamer;
- 0 wt% to 10.0 wt% thickener;
- 0 wt% to 50 wt% water;
based on the total amount of the plastisol precursor composition.

In this embodiment the aqueous polymer composition preferably comprises, more preferably consists of 95 wt % to 99.5 wt %, more preferably 97 wt % to 98.5 wt %, most preferably 97.5 wt% to 98.75 wt%, of the, preferably unpreserved, plastisol precursor composition, and 0.5 wt% to 5 wt%, preferably 1 wt% to 3 wt%, more preferably 1.25 wt % to 2.5 wt% of lactic acid ester, based on the total amount of aqueous polymer composition, wherein the plastisol precursor composition comprises, preferably consists of
- 0 to 20.0 wt % of dry binder polymer, preferably polyvinylchloride powder;
- 10.0 wt% to 80.0 wt% of at least one binder, preferably an aqueous suspension or dispersion of a binder polymer, preferably polyvinylchloride, more preferably containing 35 wt% to 40 wt%, most preferably 38 wt% to 40 wt% of the binder polymer, preferably polyvinyl chloride;
- 0 wt% to 5.0 wt%, wetting agent;
- 5 wt% to 25.0 wt% plasticizer;
- 0 wt% to 10.0 wt% alkalizer;
- 0 wt% to 5.0 wt%, preferably 0.5 wt% to 5.0 wt% defoamer;
- 0 wt% to 10.0 wt% thickener;
- 0 wt% to 50 wt% water;
based on the total amount of the plastisol precursor composition.

The aqueous polymer composition, which is a plastisol precursor comprising polyvinylchloride preferably has a pH-value of 8 to 14, more preferably 8 to 12.

The aqueous polymer composition, which is a plastisol precursor preferably comprises 3.5 wt% to 52 wt% binder polymer, preferably polyvinylchloride based on the total amount of the aqueous polymer composition.

The weight ratio of lactic acid ester and binder polymer, preferably polyvinylchloride in the aqueous polymer composition, which is a plastisol precursor preferably is in the range between 0.7 and 0.04.

In an alternative embodiment, the aqueous polymer composition is an ink receptive coating and comprises, preferably consists of an, preferably unpreserved, ink receptive coating composition and lactic acid ester.

In this embodiment, the ink receptive coating composition comprises,
- 10.0 wt% to 55.0 wt% of at least one binder, preferably an aqueous polymer suspension or dispersion, more preferably containing 10 wt% to 55 wt% of binder polymer, preferably poly(meth)acrylate or polyvinylalcohol, more preferably 45 wt% to 55 wt% of poly(meth)acrylate or 10 wt% to 25 wt% of polyvinylalcohol;
- 0.05 wt% to 10.0 wt% wetting agent;
- 0.05 wt% to 3.0 wt% defoamer;
- 0.05 wt% to 5.0 wt% surface additive;
based on the total amount of the ink receptive coating composition.

Preferably the ink receptive coating composition comprises, more preferably consists of
- 0 to 50.0 wt % of at least one pigment;
- 10.0 wt% to 55.0 wt% of at least one binder, preferably an aqueous polymer suspension or dispersion, more preferably containing 10 wt% to 55 wt% of binder polymer, preferably poly(meth)acrylate or polyvinylalcohol, more preferably 45 wt% to 55 wt% of poly(meth)acrylate or 10 wt% to 25 wt% of polyvinylalcohol;
- 0.05 wt% to 10.0 wt% wetting agent;
- 0 wt% to 5.0 wt% alkalizer;
- 0.05 wt% to 3.0 wt% defoamer;
- 0.05 wt% to 5.0 wt% surface additive;
- 0 wt% to 10.0 wt% thickener;
- 0 wt% to 40 wt% water;
based on the total amount of the ink receptive coating composition.

More preferably, the aqueous polymer composition is an ink receptive coating and comprises, preferably consists of
- 95 wt % to 99.5 wt %, more preferably 97 wt % to 98.5 wt %, most preferably 97.5 wt% to 98.75 wt% of an, preferably unpreserved, ink receptive coating composition, and 0.5 wt% to 5 wt%, preferably 1 wt% to 3 wt%, more preferably, 1.25 wt % to 2.5 wt% of lactic acid ester based on the total amount of the aqueous polymer composition, wherein the ink receptive coating composition comprises, more preferably consists of:
- 0 to 50.0 wt % of at least one pigment;
- 10.0 wt% to 55.0 wt% of at least one binder, preferably an aqueous polymer suspension or dispersion, more preferably containing 10 wt% to 55 wt% of binder polymer, preferably poly(meth)acrylate or polyvinylalcohol, more preferably 45 wt% to 55 wt% of poly(meth)acrylate or 10 wt% to 25 wt% of polyvinylalcohol;
- 0.05 wt% to 10.0 wt% wetting agent;
- 0 wt% to 5.0 wt% alkalizer;
- 0.05 wt% to 3.0 wt% defoamer;
- 0.05 wt% to 5.0 wt% surface additive;
- 0 wt% to 10.0 wt% thickener;
- 0 wt% to 40 wt% water;
based on the total amount of ink receptive coating composition.

The aqueous polymer composition, which is an ink receptive coating, preferably comprising poly(meth)acrylate or polyvinylalcohol, preferably has a pH-value of 7.5 to 11.

The aqueous polymer composition, which is an ink receptive coating comprising poly(meth)acrylate or polyvinyl alcohol preferably comprises 4 wt% to 30 wt% poly(meth)acrylate or 0.95 wt% to 14 wt% polyvinyl alcohol based on the total amount of the aqueous polymer composition.

The weight ratio between lactic acid ester and binder polymer in the aqueous polymer composition, which is an ink receptive coating comprising poly(meth)acrylate or polyvinylalcohol preferably is in the range between 0.04 and 0.6 for poly(meth)acrylate or is in the range between 0.09 and 2.6 for polyvinylalcohol.

In another embodiment the aqueous polymer composition is a printing ink. In this embodiment the aqueous polymer composition preferably comprises, more preferably consists of a, preferably unpreserved, printing ink composition and lactic acid ester.

The printing ink composition preferably comprises, more preferably consists of
- 0 wt% to 25.0 wt %, preferably 1 wt% to 25.0 wt%, of at least colorant, preferably a pigment;
- 10.0 wt% to 90.0 wt% of at least one binder, preferably an aqueous polymer suspension or dispersion, preferably containing 30 wt% to 60 wt% of binder polymer;
- 55 wt% to 90 wt% water;
based on the total amount of the printing ink composition.

Preferably the printing ink composition comprises, more preferably consists of
- 0 to 25.0 wt % of preferably 1 wt% to 25.0 wt%, of at least colorant, preferably apigment;
- 10.0 wt% to 90.0 wt% of at least one binder, preferably an aqueous polymer suspension or dispersion, preferably containing 30 wt% to 60 wt% of binder polymer;
- 0 wt% to 5.0 wt%, preferably 1.0 wt% to 0.5 wt% wetting agent;
- 0 wt% to 1.0 wt%, preferably 0.1 wt% to 1wt% alkalizer;
- 0 wt% to 1.0 wt%, preferably 0.1 wt% to 1wt% defoamer;
- 0 wt% to 5.0 wt% thickener;
- 55 wt% to 90 wt% water;
based on the total amount of the printing ink composition.

The aqueous polymer composition, which is printing ink preferably comprises, more preferably consists of, preferably 95 wt % to 99.5 wt %, more preferably 97 wt % to 98.5 wt %, most preferably 97.5 wt% to 98.75 wt% of a of a, preferably unpreserved, printing ink composition and 0.5 wt% to 5 wt%, preferably 1 wt% to 3 wt%, more preferably 1.25 wt % to 2.5 wt% of lactic acid ester, based on the total amount of the aqueous polymer composition, wherein the printing ink composition preferably comprises, more preferably consists of
- 0 to 25.0 wt % of preferably 1 wt% to 25.0 wt%, of at least one colorant, preferably a pigment;
- 10.0 wt% to 90.0 wt% of at least one binder, preferably an aqueous polymer suspension or dispersion, preferably containing 30 wt% to 60 wt% of binder polymer;
- 0 wt% to 5.0 wt%, preferably 1.0 wt% to 0.5 wt% wetting agent;
- 0 wt% to 1.0 wt%, preferably 0.1 wt% to 1wt% alkalizer;
- 0 wt% to 1.0 wt%, preferably 0.1 wt% to 1wt% defoamer;
- 0 wt% to 5.0 wt% thickener;
- 55 wt% to 90 wt% water;
based on the total amount of the printing ink composition.

The aqueous polymer composition, which is a printing ink preferably has a pH-value of 8 to 10.

The aqueous polymer composition, which is a printing ink preferably comprises 2.5 wt% to 55 wt% binder polymer, based on the total amount of aqueous polymer composition.

The weight ratio between lactic acid ester and binder polymer in the aqueous polymer composition, which is a printing ink preferably is in the range between 0.02 and 0.86 preferably 0.02 and 0.43, more preferably, 0.02 and 0.09.

In another embodiment the aqueous polymer composition is an adhesive. The aqueous polymer composition, which is an adhesive preferably comprises, more preferably consists of an, preferably unpreserved, adhesive composition and lactic acid ester.

The adhesive composition preferably comprises ethylene-vinylacetate-copolymer, polyvinylacetate, poly(meth)acrylate homopolymer or poly(meth)acrylate-styrene copolymer, more preferably poly(meth)acrylate- styrene copolymer as binder polymer.

The adhesive composition preferably comprises,
- 10.0 wt% to 50.0 wt% of at least one binder, preferably an aqueous polymer suspension or dispersion, preferably containing 40 wt% to 60 wt% of binder polymer, preferably a poly(meth)acrylate-styrene copolymer;
- 0 wt% to 5.0 wt%, preferably 1 wt% to 5.0 wt%, crosslinker;
- 10 wt% to 50 wt% water;
based on the total amount of adhesive composition.

The adhesive composition preferably comprises, more preferably consists of
- 0 to 25.0 wt % of at least one filler;
- 10.0 wt% to 50.0 wt% of at least one binder, preferably an aqueous polymer suspension or dispersion, preferably containing 40 wt% to 60 wt% of binder polymer, preferably a poly(meth)acrylate-styrene copolymer;
- 0 wt% to 10.0 wt%, preferably 1.0 wt% to 10 wt% wetting agent;
- 0 wt% to 4.0 wt% pH regulating agent;
- 0 wt% to 2.0 wt%, preferably 0.1 wt% to 2.0 wt% defoamer;
- 0 wt% to 5.0 wt%, preferably 1 wt% to 5.0 wt% surface additives;
- 0 wt% to 2.0 wt% thickener;
- 0 wt% to 2.0 wt% colorant;
- 0 wt% to 5.0 wt% crosslinker;
- 10 wt% to 50 wt% water;
based on the total amount of adhesive composition.

The aqueous polymer composition, which is an adhesive preferably comprises, more preferably consists of, preferably 95 wt % to 99.5 wt %, more preferably 97 wt % to 98.5 wt %, most preferably 97.5 wt% to 98.75 wt%of an, preferably unpreserved, adhesive composition and 0.5 wt% to 5 wt%, preferably 1 wt % to 3 wt%, more preferably 1.25 wt % to 2.5 wt% of lactic acid ester, based on the total amount of the aqueous polymer composition, preferably wherein the adhesive composition comprises, more preferably consists of
- 0 to 25.0 wt % of at least one filler;
- 10.0 wt% to 50.0 wt% of at least one binder, preferably an aqueous polymer suspension or dispersion, preferably containing 40 wt% to 60 wt% of binder polymer, preferably a poly(meth)acrylate-styrene copolymer;
- 0 wt% to 10.0 wt%, preferably 1.0 wt% to 10 wt% wetting agent;
- 0 wt% to 4.0 wt% pH regulating agent;
- 0 wt% to 2.0 wt%, preferably 0.1 wt% to 2.0 wt% defoamer;
- 0 wt% to 5.0 wt%, preferably 1 wt% to 5.0 wt% surface additives;
- 0 wt% to 2.0 wt% thickener;
- 0 wt% to 2.0 wt% colorant;
- 0 wt% to 5.0 wt% crosslinker;
- 10 wt% to 50 wt% water;
based on the total amount of adhesive composition.

The aqueous polymer composition, which is an adhesive preferably has a pH-value of 7 to 9.

The aqueous polymer composition, which is an adhesive, preferably comprises 3.9 wt% to 29.6 wt% binder polymer, based on the total amount of aqueous polymer composition.

The weight ratio between lactic acid ester and binder polymer in the aqueous polymer composition, which is an adhesive preferably is in the range between 0.04 and 0.64.

The problem is also solved by the use of a lactic acid ester for the preservation of, preferably as in-can preservative for, an aqueous polymer composition, preferably plastisol precursors, ink receptive coatings, printing inks or adhesives against microbial growth, preferably for at least six days, in particular at least six days, in particular six days to two years, more preferably at least 3 months, more preferably at least 6 months, especially preferred 3 months to 1 year.

The process for producing a composition according to the invention may comprise the following steps:
- addition of components to obtain the respective base formulation, preferably selected from plastisol precursor, ink receptive coating, printing ink or adhesive composition and at least one lactic acid ester
- dispersing of the prepared composition, in particular, of the components in the solvent, preferably water.

Respective steps do not have to be carried out independently of one another, i.e. a multistep dispersion can be carried out during the addition of the components.

The conventional dispersion methods are known to the skilled person. For the production of the compositions according to the invention, dispersion by means of a dissolver and bead mill is preferred. For example, dispersion by bead mill can be carried out before the addition of water.

The time of addition of the lactic acid esters can be arbitrarily determined.

### Experimental

The tested compositions were prepared by dispersing the components of the respective base formulation and optionally a lactic acid ester or conventional preservative system by means of a dissolver and optionally a bead mill.

Logarithmic germ reduction was determined in accordance with DIN EN ISO 11930:2023-01, respectively.

Above DIN standard establishes a procedure for interpreting data collected to evaluate the overall protection against microbial infestation of a cosmetic product, as determined by the preservative-load (challenge)-test or the microbiological risk assessment, or both. This method is primarily intended for water-soluble or water-miscible cosmetic products and may also be applied, with adaptations, to other products in which water is the internal (discontinuous) phase.

The load tests are based on the FAKO test SM 020. The test (described below) is used for the determination of the preservative effect of chemical preservatives, e.g. in waterborne paints, adhesives and other waterborne technical emulsions or dispersions. The method described is intended to test the effectiveness of chemical preservatives with regard to in-can preservation. For this purpose, the preservatives to be tested are added to the unpreserved samples in various concentrations. A continuous microbial load is achieved by periodic inoculation of the test batches. Parallel to inoculation, smears of the individual preparations are also taken immediately before inoculation. An assessment is made on the basis of the microbial growth of the smears. A preservative is more effective, the longer the period until the first appearance of microbial growth.

50 g of the preparation to be tested are weighed and the preservatives to be investigated are added in separate preparations in their respective application concentrations. To comparative samples that already are in preserved form no further biocide is added. An unpreserved sample is used as a growth control in each case. Two days after the addition of the preservatives, the samples are inoculated with 0.2 ml of an inoculum solution consisting of the test organisms listed below. The inoculation solution has a titer of about 1010 germs/ml.

The test mixtures are subsequently inoculated once a week and spread on agar plates (casein peptone soy meal peptone agar for bacteria and Sabouraud dextrose agar for yeasts and molds) once a week, with the first smear immediately prior to reinoculation. The assessment of the microbial growth of the smears is performed after a three-day incubation at 25 °C. Negative smears are observed for a further two days and reassessed. The evaluation of the preservation effect of the individual product concentrations is carried out in a semi-quantitative method via the growth of the individual smears according to the grading from -over + to +++. The growth is differentiated according to bacteria, yeasts and molds. The test is carried out for a maximum of six weeks, i.e. over six inoculation cycles.

The sample is well preserved if, under the above laboratory conditions, it has been exposed to a period of six weeks under the above-mentioned laboratory conditions without microbial infestation of the sample preparations, i.e. no microbial growth is detectable even after the sixth inoculation. Based on many years of experience with this test method, microbiological stability over two years can be derived from this.

Above FAKO test was shortened from 6 to 3 weeks and germ count determinations were performed following DIN EN ISO 11930. The modifications (shortened test time and the logarithmic germ reduction recorded with numbers following DIN EN ISO 11930) were made for the purpose of a better comparison of preserved and non-preserved systems.

The microbial storage stability of different formulations were investigated after a repetitive preservation stress test with quadruple inoculation (0d, 7d, 14d, 21d). The microbial (bacterial/ fungal) count development at 20-25°C after inoculation of the samples with the listed germ suspensions is considered. Table 1 shows an exemplary test process with exemplary results.

**Table 1:**

| **Mixed bacterial suspension, Bacteria** (P.aeruginosa ATCC 9027,Staph.aureus ATCC 6538, E.coli ATCC 8739) | | | | | | | |
|---|---|---|---|---|---|---|---|
| **0h** | **6d** | **7d** | **13d** | **14d** | **20d** | **21d** | **28d** |
| Microbial counts in CFU/q | | | | | | | |
| 4.0×10⁵ | < 1.0×10¹ | 6.4×10⁵ | < 1.0×10¹ | 4.6×10⁵ | < 1.0×10¹ | 5.4×10⁵ | < 1.0×10¹ |

| Logarithmic germ reduction | | | | | | | |
|---|---|---|---|---|---|---|---|
| --- | > 4.6 | --- | > 4.8 | --- | > 4.7 | --- | >4.7 |

| **Mixed microbial suspension, Yeasts & Molds** (C.albicans ATCC 10231,A.brasiliensis ATCC 16404) | | | | | | | |
|---|---|---|---|---|---|---|---|
| **0h** | **6d** | **7d** | **13d** | **14d** | **20d** | **21d** | **28d** |
| Microbial counts in CFU/q | | | | | | | |
| 6.2 × 10⁴ | < 1.0×10¹ | 8.4 × 10⁴ | < 1.0×10¹ | 6.0 × 10⁴ | < 1.0×10¹ | 8.8×10⁴ | < 1.0×10¹ |

| Logarithmic germ reduction | | | | | | | |
|---|---|---|---|---|---|---|---|
| --- | >3.8 | --- | >3.9 | --- | >3.8 | --- | >3.9 |

| | | | | | | | |
|---|---|---|---|---|---|---|---|
| Methods for determining microbial counts based on DIN EN ISO 11930. Microbial counts in CFU/g (CFU = colony forming units) | | | | | | | |

Tables 2 and 3 show the effect of different lactic acid esters in various concentrations on the microbial (bacteria) or fungal (yeast and mold) growth in otherwise unpreserved aqueous polymer compositions for application as printing inks.

| **Table 2: Bacteria** | | **LOGARITHMIC GERM REDUCTION** | | | |
|---|---|---|---|---|---|
| **Lactic Acid Ester** | **Printing Ink** | **6d** | **13d** | **20d** | **28d** |
| N-propyl-L-lactate 5% | FOLCO AQUAFLEX F3C-155 YELLOW V4K0 | 4.3 | 5 | 4.8 | 4.9 |
| N-propyl-L-lactate 2.5% | FOLCO AQUAFLEX F3C-155 YELLOW V4K1 | 4.3 | 5 | 4.8 | 4.9 |
| N-propyl-L-lactate 1.25% | FOLCO AQUAFLEX F3C-155 YELLOW V4K2 | 4.3 | 5 | 4.8 | 1.2 |
| N-butyl L-lactate 5% | FOLCO AQUAFLEX F3C-155 YELLOW V8K0 | 4.3 | 5 | 4.8 | 4.9 |
| N-butyl-L-lactate 2.5% | FOLCO AQUAFLEX F3C-155 YELLOW V8K1 | 4.3 | 5 | 4.8 | 4.9 |
| 2-Ethylhexyl-L-lactate 2.5% | FOLCO AQUAFLEX F3C-155 YELLOW V9K1 | 4.3 | 0.4 | 0.3 | 4.9 |
| Ethyl L-lactate 2.5% | FOLCO AQUAFLEX F3C-155 YELLOW V10K1 | 4.3 | 5 | 2.4 | 4.9 |
| Ethyl L-lactate 1.25% | FOLCO AQUAFLEX F3C-155 YELLOW V10K2 | 4.3 | 5 | 1.3 | 4.9 |

| **Table 3: Yeast and mold** | | **LOGARITMIC GERM REDUCTION** | | | |
|---|---|---|---|---|---|
| **Lactic Acid Ester** | **Printing Ink** | **6d** | **13d** | **20d** | **28d** |
| N-propyl-L-lactate 5% | FOLCO AQUAFLEX F3C-155 YELLOW V4K0 | 3.9 | 3.9 | 4 | 4 |
| N-propyl-L-lactate 2.5% | FOLCO AQUAFLEX F3C-155 YELLOW V4K1 | 3.9 | 3.9 | 4 | 4 |
| N-propyl-L-lactate 1.25% | FOLCO AQUAFLEX F3C-155 YELLOW V4K2 | 1.8 | 2.4 | 1.8 | 1 |
| N-butyl L-lactate 5% | FOLCO AQUAFLEX F3C-155 YELLOW V8K0 | 3.9 | 3.9 | 4 | 4 |
| N-butyl-L-lactate 2.5% | FOLCO AQUAFLEX F3C-155 YELLOW V8K1 | 3.9 | 3.9 | 4 | 4 |
| 2-Ethylhexyl-L-lactate 2.5% | FOLCO AQUAFLEX F3C-155 YELLOW V9K1 | 0.9 | 0.5 | 0.4 | 0.3 |
| Ethyl L-lactate 2.5% | FOLCO AQUAFLEX F3C-155 YELLOW V10K1 | 3.9 | 3.9 | 3.3 | 2.2 |
| Ethyl L-lactate 1.25% | FOLCO AQUAFLEX F3C-155 YELLOW V10K2 | 1.9 | 1.5 | 0.8 | 0.5 |

Tables 4 and 5 show the effect of conventional preservative systems, 2.5 wt% N-propyl L-lactate or 2.5 wt% N-butyl L-lactate on the microbial (bacteria) or fungal (yeast and mold) growth in comparison to the unpreserved formulations. Variants for testing were prepared by adding the conventional preservative system or the selected lactic acid esters to the respective basic formulation of unpreserved aqueous polymer compositions for application as printing inks and plastisol precursors.

The formulations with lactic acid ester exhibit significantly better storage stability than the lactic acid ester-free formulations without conventional preservative system.

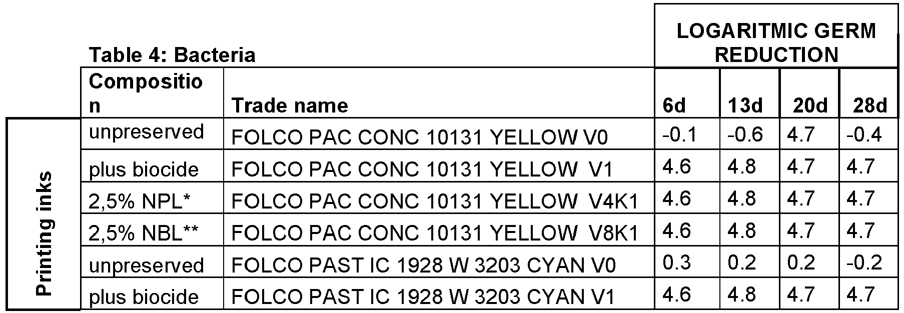

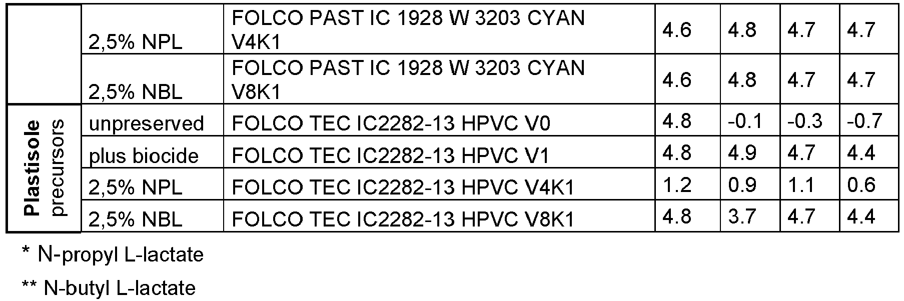

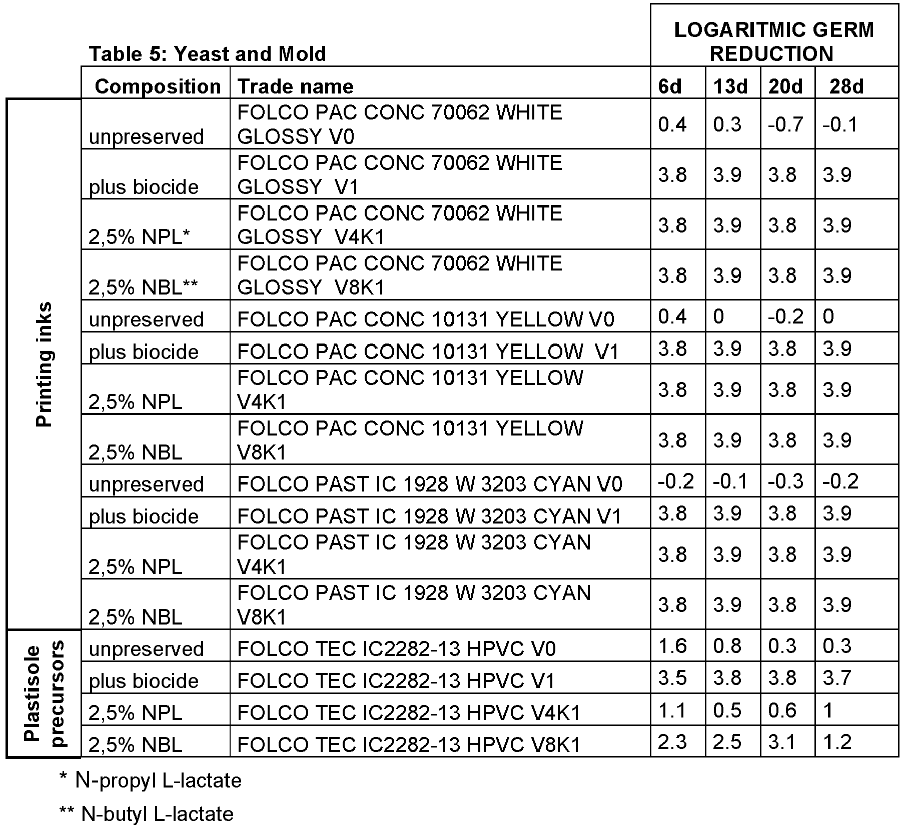

To test the performance of printing inks with lactic acid esters, two different samples were prepared, each containing 1.25% and 2.5% N-butyl-L-lactate. The printing inks were produced via usual production steps comprising the dispersion with dissolver and bead mill.

Testing was carried out according to test plans specified for printing ink formulations. Table 4 and 5 (Annex II) cover the result of this test. Slight softening of the tolerances for the quality characteristics viscosity, pH value, color strength and Delta E have been found. The measures to eliminate these deviations are known to the person skilled in the art.

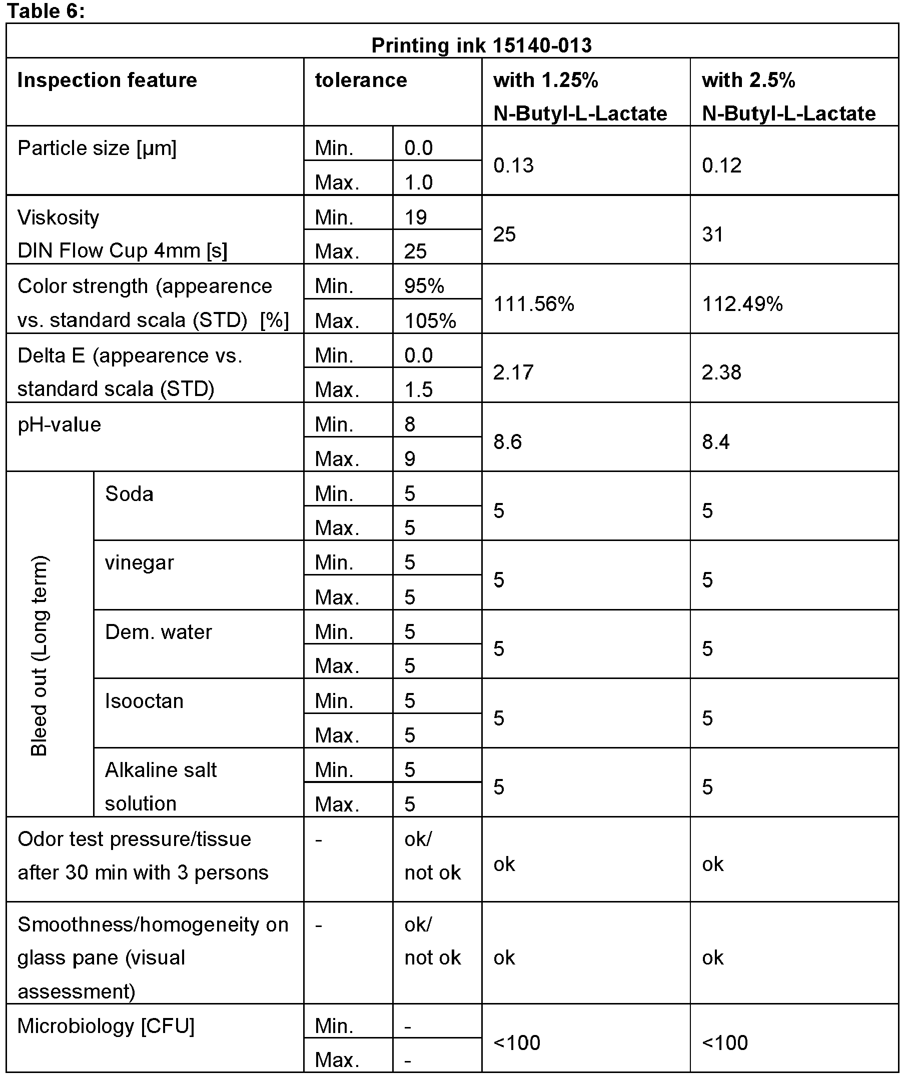

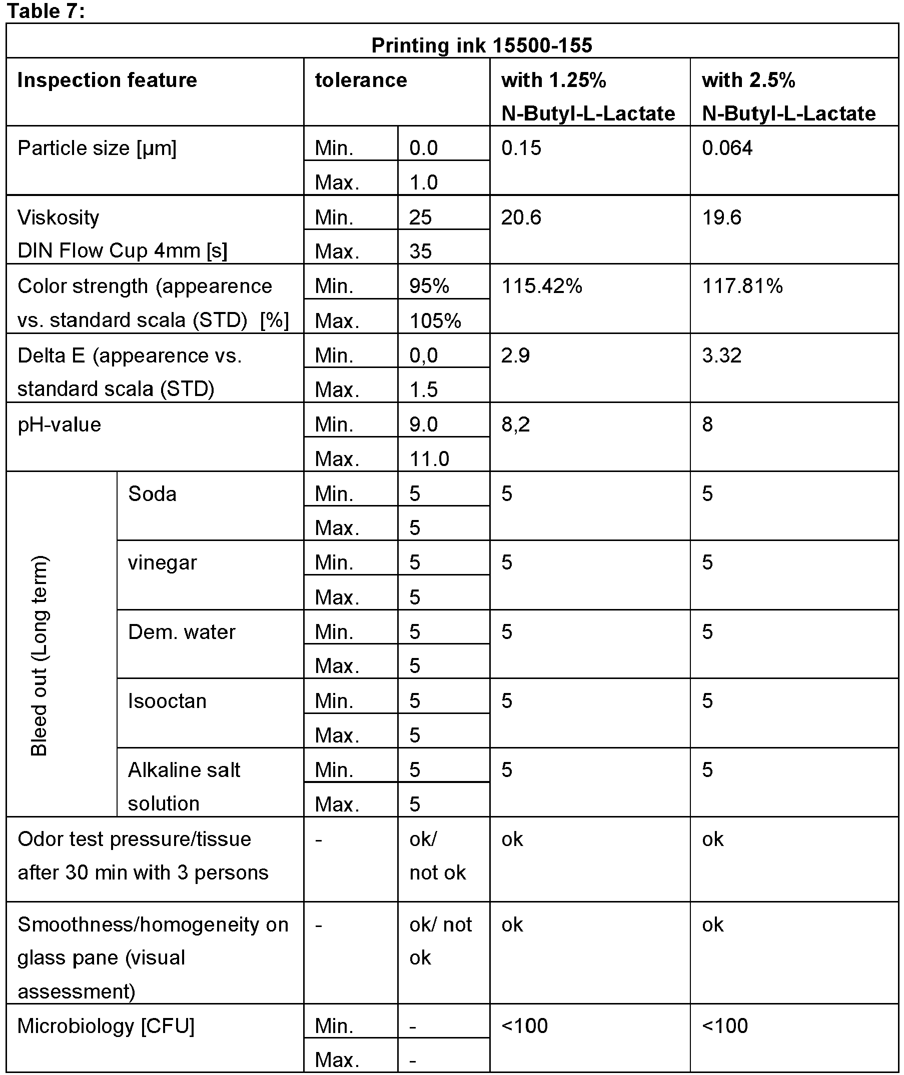

## Claims

1. Aqueous polymer composition comprising at least one lactic acid ester, **characterized in that** the at least one lactic acid ester is the only compound in the composition, that is present in a concentration sufficient to exhibit an antimicrobial, preferably biocidal, effect.

2. Aqueous polymer composition comprising at least one lactic acid ester, preferably according to claim 1, **characterized in that** the lactic acid ester is the only compound in the composition, that is present in a concentration sufficient to increase the logarithmic germ reduction when determined in accordance with DIN EN ISO 11930:2023-01.

3. Aqueous polymer composition according to claims 1 or 2, **characterized in that** the pH-value of the aqueous polymer composition is 4 to 12, preferably 7 to 12.

4. Aqueous polymer composition comprising at least one lactic acid ester, preferably according to claim 1 or 2, **characterized in that** it is stable against microbial growth, preferably bacterial and/or fungal growth, for at least six days, preferably six days to two years, more preferably at least 3 months, most preferably at least 6 months, and that the pH-value of the composition is 4 to 12, preferably 7 to 12, more preferably 8 to 10.

5. Aqueous polymer composition according to any of the previous claims, **characterized in that** it comprises 0.5 wt% to 5 wt%, preferably 1 wt% to 3 wt%, more preferably 1.25 wt % to 2.5 wt% of lactic acid ester.

6. Aqueous polymer composition according to any of the previous claims, **characterized in that** the weight ratio between lactic acid ester and polymer, preferably binder polymer, is in the range between 0.02 and 2.6, preferably 0.02 and 1, more preferably lower than 1.

7. Composition according to any of the previous claims, wherein the lactic acid ester is an ester according to formula (I) 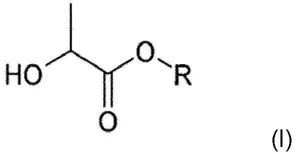 wherein R is a hydrocarbon radical, more preferably an aliphatic hydrocarbon radical, with C1 to C8, preferably C2 to C4, more preferably a C1 to C8-alkyl, especially preferred C2 to C4-alkyl, most preferably propyl or butyl.

8. Aqueous polymer composition according to any of the previous claims, **characterized in that** the composition comprises a binder polymer selected from polyvinylchloride, polyurethane, polyvinylalcohol and/or poly(meth)acrylate ethylene-vinylacetate-copolymer, polyvinylacetate, or poly(meth)acrylate-styrene copolymer and preferably is a plastisol precursor, printing ink, ink receptive coating or adhesive.

9. Aqueous polymer composition according to any of the previous claims, **characterized in that** it comprises lactic acid ester and a plastisol precursor composition comprising:
- 0 to 20.0 wt % of dry binder polymer, preferably polyvinylchloride powder;
- 10.0 wt% to 80.0 wt% of at least one binder, preferably an aqueous suspension or dispersion of a binder polymer, preferably polyvinylchloride, preferably containing 35 wt% to 40 wt%, more preferably 38 wt% to 40 wt% of the binder polymer;
- 0 wt% to 5.0 wt% wetting agent;
- 5 wt% to 25.0 wt% plasticizer;
- 0 wt% to 10.0 wt% alkalizer;
- 0 wt% to 5.0 wt%, preferably 0.5 wt% to 5.0 wt% defoamer;
- 0 wt% to 10.0 wt% thickener;
- 0 wt% to 50 wt% water;
based on the total amount of the plastisol precursor composition.

10. Aqueous polymer composition according to claims 1 to 8, **characterized in that** it comprises lactic acid ester and an ink receptive coating composition comprising:
- 0 to 50.0 wt % of at least one pigment;
- 10.0 wt% to 55.0 wt% of at least one binder, preferably an aqueous polymer suspension or dispersion, more preferably containing 10 wt% to 55 wt% of binder polymer, preferably poly(meth)acrylate or polyvinylalcohol, more preferably 45 wt% to 55 wt% of poly(meth)acrylate or 10 wt% to 25 wt% of polyvinylalcohol;
- 0.05 wt% to 10.0 wt% wetting agent;
- 0 wt% to 5.0 wt% alkalizer;
- 0.05 wt% to 3.0 wt% defoamer;
- 0.05 wt% to 5.0 wt% surface additive;
- 0 wt% to 10.0 wt% thickener;
- 0 wt% to 40 wt% water;
based on the total amount of the ink receptive coating composition.

11. Aqueous polymer composition according to claim 10, **characterized in that** the weight ratio between lactic acid ester and binder polymer is 0.04 to 2.6, preferably between lactic acid ester and poly(meth)acrylate is in the range between 0.04 and 0.6 or between lactic acid ester and polyvinylalcohol is in the range between 0.09 and 2.6.

12. Aqueous polymer composition according to claims 1 to 8, **characterized in that** it comprises lactic acid ester and a printing ink composition, comprising:
- 0 to 25.0 wt % of at least one colorant;
- 10.0 wt% to 90.0 wt% of at least one binder, preferably an aqueous polymer suspension or dispersion, preferably containing 30 wt% to 60 wt% of binder polymer, preferably poly(meth)acrylate;
- 1.0 wt% to 5.0 wt% wetting agent;
- 0.1 wt% to 1.0 wt% alkalizer;
- 0.1 wt% to 1.0 wt% defoamer;
- 0 wt% to 5.0 wt% thickener;
- 55 wt% to 90 wt% water;
based on the total amount of the printing ink composition.

13. Aqueous polymer composition according to claims 1 to 8, **characterized in that** it comprises lactic acid ester and an adhesive composition, comprising:
- 0 to 25.0 wt % of at least one filler;
- 10.0 wt% to 50.0 wt% of at least one binder, preferably an aqueous polymer suspension or dispersion, preferably containing 40 wt% to 60 wt% of binder polymer, preferably selected from ethylene-vinylacetate-copolymer,polyvinylacetate, poly(meth)acrylate homopolymer or poly(meth)acrylate-styrene copolymer, more preferably poly(meth)acrylatestyrene copolymer;
- 1.0 wt% to 10.0 wt% wetting agent
- 0 wt% to 4.0 wt% pH regulating agent;
- 0.1 wt% to 2.0 wt% defoamer;
- 0 wt% to 5.0 wt% surface additives;
- 0 wt% to 2.0 wt% thickener;
- 0 wt% to 2.0 wt% colorant;
- 0 wt% to 5.0 wt% crosslinker;
- 10 wt% to 50 wt% water;
based on the total amount of the adhesive composition.

14. Aqueous polymer composition according to claim 9 or 14, **characterized in that** the weight ratio between lactic acid ester and binder polymer is in the range between 0.04 and 0.64.

15. Use of a lactic acid ester for the preservation of, preferably as in-can preservative for, an aqueous polymer composition, preferably as defined in any of the previous claims, against microbial growth, especially bacterial and/or fungal growth, preferably for least six days, in particular six days to two years, more preferably at least 3 months, more preferably at least 6 months, especially preferred 3 months to 1 year.
